# EUROPEAN PATENT APPLICATION

(11) **EP 4 804 354 A1**
(43) Date of publication of application: **09.09.2026**
(21) Application number: 26160095.1
(22) Date of filing: 23.02.2026
(51) Int. Cl.: H02B 11/133

(54) **DRAWOUT REJECTION INTERLOCK ASSEMBLY FOR WITHDRAWABLE CIRCUIT BREAKER**

(30) Priority: 03.03.2025 US 202519068577
(71) Applicant: Eaton Intelligent Power Limited, Dublin 4, D04 Y0C2 (IE)
(72) Inventor: Pande, Pranav, Pune (IN); Mahajan, Amol Kishor, Pune (IN)
(74) Representative: Venner Shipley LLP

(57) **Abstract**

A field installable rejection interlock system (100) including a breaker kit (110) and a cassette kit (160) prevents insertion of a drawout circuit breaker into an electrically incompatible frame. The breaker kit (110) gets installed on the breaker exterior and includes a side mounting plate (111), an actuator blade (115), and a slider plate (120). The cassette kit (160) gets installed in the cassette interior and includes a mounting bracket (161), a driven lever (165) with an L-bracket (167) attached, and a ramp (170). In their default states, the driven lever (165) is positioned with the L-bracket (167) obstructing movement of the incompatible circuit breaker into the cassette, or the slider plate (120) is positioned to obstruct movement of the breaker into the incompatible cassette. In the case of a combination of a compatible breaker (51) and cassette (52), the ramp (170) pushes the slider plate (120) to remove the first obstruction/interlock, and the actuator blade (115) actuates rotation of the driven lever (165) and L-bracket (167) to remove the second obstruction/interlock.

## Description

### FIELD OF THE INVENTION

The disclosed concept relates generally to drawout circuit breaker systems, and in particular, to an interlock system used to prevent insertion of a circuit breaker into an electrically incompatible frame in a drawout circuit breaker system.

### BACKGROUND OF THE INVENTION

Drawout circuit breaker systems are used in settings where a power distribution system requires several circuit breakers to provide power to all load circuits in the setting. A drawout system includes a frame having multiple openings which are each structured to receive an individual circuit breaker, and a central management component that monitors all of the individual circuit breakers. Within each opening in the frame, a cassette is installed and a circuit breaker is movably coupled to the cassette which enables the circuit breaker to be drawn into and drawn out of the frame in a sliding fashion. The drawout system has a modular design which enables individual circuit breakers to be decommissioned and removed from the drawout system without having to shut down the entire drawout system. As such, when any individual circuit breaker requires maintenance or servicing to be performed, the individual circuit breaker can be removed from the cassette while all other circuit breakers in the drawout system remain in use.

In order to ensure proper operation of a drawout system, the cassettes and the individual circuit breakers are designed so that only circuit breakers having the proper electrical rating and designed for use with the specific central management component of the drawout system can be inserted into the openings formed in the frame. Within any one physical frame size, drawout circuit breakers come in a variety of continuous current and interrupting ratings. For a given drawout system, in order to ensure that only circuit breakers having the proper compatibility are inserted into the frame, both the cassettes for the drawout system and the circuit breakers for the drawout system can include interlock features that only allow the proper type of circuit breaker to be inserted into the type of cassette included in the frame. These interlock features prevent the insertion of a drawout circuit breaker into a cassette in a frame with: inadequate interrupting ability, physically incompatible primary disconnects, and/or an incompatible phase sequence.

It will be appreciated that performance improvements are regularly achieved in the field of power distribution systems, such that a customer who purchased a drawout circuit breaker system in the past may find at a later point in time that a new drawout system having improved performance capabilities has recently become available. Replacing the entire drawout system that the customer currently owns would typically be unattractive to the customer due to the money spent on the previous system being significant and due to the cost of purchasing the new system also being significant.

One solution that a drawout system producer can employ to maintain customer loyalty is to provide retrofit solutions that enable the improved performance electrical features of a newly designed circuit breaker to be used within an older drawout system's frame. A retrofit solution entails providing both a retrofit cassette and a retrofit circuit breaker, with the retrofit cassette being different in structure than both the old system's cassette and the new system's cassette, and with the retrofit circuit breaker having the same electrical capabilities of the new circuit breakers and having certain structural features that enable the retrofit circuit breaker to operate with improved performance when installed in the retrofit cassette within the old system's frame.

The retrofit cassette is designed so that, for each opening in the older drawout system's frame, the retrofit cassette can be installed in the older system's frame after the original cassette provided with the older system's frame is removed. Circuit breakers in a drawout system can include both a primary side disconnect and a secondary side disconnect. Among other aspects, the improvements to the secondary side disconnect included in a new circuit breaker for a new drawout system can make the new circuit breaker incompatible with the design of the old cassette. Accordingly, one of the features that may be provided in a retrofit cassette is an adaptive secondary side structure that ensures compatibility between the secondary disconnect of the new circuit breaker and the corresponding secondary disconnect side provided within the opening of the old system's frame. The adaptive secondary side structure provided in the retrofit cassette ensures that, when the retrofit cassette is installed in the old system's frame and the retrofit circuit breaker is then subsequently installed in the retrofit cassette, the secondary side disconnect of the retrofit circuit breaker can operate properly within the old system's frame.

When designing the retrofit cassette, preventing insertion of the old circuit breaker into the retrofit cassette should be accounted for. Insertion of the old circuit breaker into the retrofit cassette within the old frame is to be avoided, because the retrofit cassette is designed specifically to ensure a proper connection between the secondary side disconnect of the retrofit circuit breaker with the old system's frame and thus cannot ensure a proper connection between the secondary side disconnect of the old circuit breaker with the old system's frame. In addition, when designing the retrofit circuit breaker, preventing insertion of the retrofit circuit breaker into the old cassette should be accounted for. Insertion of the retrofit circuit breaker into the old cassette within the old frame is to be avoided, because the old cassette is designed specifically to ensure a proper connection between the secondary side disconnect of the old circuit breaker with the old system's frame and thus cannot ensure a proper connection between the secondary side disconnect of the retrofit circuit breaker with the old system's frame.

Because a retrofit cassette and a retrofit circuit breaker are constrained by the specific structural dimensions and electrical characteristics of both the old and new drawout systems, designing structural features for the retrofit cassette and retrofit circuit breaker that both: (1) enable the retrofit cassette and retrofit circuit breaker to only be structurally compatible with one another and with the frame of the old drawout system, and (2) render the retrofit circuit breaker and retrofit cassette structurally incompatible with the cassettes and circuit breakers of the old and new drawout systems, proves challenging.

There is thus room for an assembly that prevents the insertion of a retrofit circuit breaker into a non-retrofit cassette and prevents the insertion of a non-retrofit circuit breaker into a retrofit cassette in a drawout circuit breaker system.

### SUMMARY OF THE INVENTION

These needs, and others, are met by an innovative rejection interlock system designed to be field installable in order to prevent a circuit breaker from being inserted into an electrically incompatible frame in a drawout circuit breaker system. The rejection interlock system includes a breaker kit designed to be installed on the exterior of a drawout circuit breaker and a cassette kit that is designed to be installed on the interior of the cassette where it can engage the breaker kit. The breaker kit includes a side mounting plate, an actuator blade, and a slider plate. The cassette kit includes a mounting bracket, a driven lever with an L-bracket attached to its rear end, an engagement pin, and a driving ramp. When the cassette kit is in its default state, the driven lever is positioned so that the L-bracket will obstruct movement of the circuit breaker into the interior of the cassette. When the breaker kit is in its default state, the slider plate is positioned so that the floor of the cassette will present an obstruction to movement of the breaker into the interior of the cassette. As the circuit breaker is pushed into the cassette, the actuator blade engages the engagement pin to rotate the driven lever so that the L-bracket no longer presents an obstruction to the circuit breaker movement. The driving ramp is positioned at the floor of the cassette so that, as the circuit breaker moves into the interior of the circuit breaker when the L-bracket no longer presents an obstruction, the driving ramp pushes the slider plate upward so that the floor of the cassette will no longer present an obstruction.

In one embodiment of the disclosed concept, a rejection interlock system for use with a circuit breaker and a cassette in a drawout circuit breaker system includes: a breaker kit and cassette kit. The breaker kit includes: a side mounting plate; an actuator blade fixedly coupled to the side mounting plate; and a slider plate movably coupled to the side mounting plate. The mounting bracket comprises: a mounting portion; a guiding track extending orthogonally from the mounting portion; and a driving ramp extending downward from the guiding track at a non-orthogonal sloped angle. The cassette kit includes: a mounting bracket, a driven lever rotatably coupled to the mounting bracket at a front end of the driven lever, an L-bracket fixedly coupled to the driven lever at a rear end of the driven lever opposite the front end, and an engagement pin extending orthogonally from the driven lever. The side mounting plate is structured to be fixedly coupled to an exterior side wall of the circuit breaker. The mounting bracket is structured to be fixedly coupled to an interior side wall of the cassette such that the guiding track lies flat on an interior floor of the cassette when the mounting portion is fixedly coupled to the interior side wall. The breaker kit and cassette kit are structured such that, when respectively installed on the circuit breaker and the cassette: in the absence of any external force acting upon the cassette kit, a default position of the driven lever positions the L-bracket to be upward relative to the front end; in the absence of any external force acting upon the breaker kit, a default position of the slider plate positions the slider plate to extend further downward than the interior floor; the actuator blade is structured to engage and exert a downward force on the engagement pin when the circuit breaker moves toward the interior of the cassette; the driven lever is structured to rotate so that the L-bracket moves downward to lie flat on the interior floor when the downward force is exerted on the engagement pin; and the driving ramp is structured to exert an upward force on the slider plate as the circuit breaker moves toward the interior of the cassette so that a bottom edge of the slider plate can clear the interior floor in the cassette.

In another embodiment of the disclosed concept, a drawout circuit breaker system includes: a drawout circuit breaker, a drawout cassette, and a rejection interlock system. The rejection interlock system includes: a breaker kit and cassette kit. The breaker kit includes: a side mounting plate; an actuator blade fixedly coupled to the side mounting plate; and a slider plate movably coupled to the side mounting plate. The mounting bracket comprises: a mounting portion; a guiding track extending orthogonally from the mounting portion; and a driving ramp extending downward from the guiding track at a non-orthogonal sloped angle. The cassette kit includes: a mounting bracket, a driven lever rotatably coupled to the mounting bracket at a front end of the driven lever, an L-bracket fixedly coupled to the driven lever at a rear end of the driven lever opposite the front end, and an engagement pin extending orthogonally from the driven lever. The side mounting plate is structured to be fixedly coupled to an exterior side wall of the circuit breaker. The mounting bracket is structured to be fixedly coupled to an interior side wall of the cassette such that the guiding track lies flat on an interior floor of the cassette when the mounting portion is fixedly coupled to the interior side wall. The breaker kit and cassette kit are structured such that, when respectively installed on the circuit breaker and the cassette: in the absence of any external force acting upon the cassette kit, a default position of the driven lever positions the L-bracket to be upward relative to the front end; in the absence of any external force acting upon the breaker kit, a default position of the slider plate positions the slider plate to extend further downward than the interior floor; the actuator blade is structured to engage and exert a downward force on the engagement pin when the circuit breaker moves toward the interior of the cassette; the driven lever is structured to rotate so that the L-bracket moves downward to lie flat on the interior floor when the downward force is exerted on the engagement pin; and the driving ramp is structured to exert an upward force on the slider plate as the circuit breaker moves toward the interior of the cassette so that a bottom edge of the slider plate can clear the interior floor in the cassette.

### BRIEF DESCRIPTION OF THE DRAWINGS

A full understanding of the invention can be gained from the following description of the preferred embodiments when read in conjunction with the accompanying drawings in which:
FIG. 1 is a front view of a drawout circuit breaker system;
FIG. 2 is a partial isometric view of a drawout circuit breaker drawn out from a cassette;
FIG. 3A is a simplified representation of an original model drawout circuit breaker having a first set of electrical characteristics and an original model cassette having a first set of cassette shaft characteristics;
FIG. 3B is a simplified representation of a new model drawout circuit breaker having a second set of electrical characteristics and a new model cassette having a second set of cassette shaft characteristics;
FIG. 3C is a simplified representation of a retrofit drawout circuit breaker having the second set of electrical characteristics of the new model drawout circuit breaker of FIG. 3B and a retrofit cassette having the first set of cassette shaft characteristics of the original model cassette of FIG. 3A;
FIG. 4 is a partial isometric view of a rejection interlock assembly for use with the retrofit circuit breaker and retrofit cassette depicted in FIG. 3C, the rejection interlock assembly including a breaker kit and a cassette kit, in accordance with an example embodiment of the disclosed concept;
FIG. 5 is an exploded view of the breaker kit installed on the exterior of the retrofit circuit breaker depicted in FIG. 3C, in accordance with an example embodiment of the disclosed concept;
FIG. 6 is an exploded view of the cassette kit installed in the interior of the retrofit cassette depicted in FIG. 3C, in accordance with an example embodiment of the disclosed concept;
FIG. 7 is a view from the perspective of the interior of the retrofit circuit breaker shown in FIG. 5 when the retrofit circuit breaker is installed in the retrofit cassette shown in FIG. 6, with the rejection interlock assembly installed;
FIG. 8 is a partial isometric view of the rejection interlock assembly shown in FIG. 4, with simplified depictions of engagement between the breaker kit and the cassette kit that facilitates successful insertion of the retrofit breaker into the retrofit cassette;
FIG. 9 is a partial isometric view of the retrofit circuit breaker of FIG. 3C with the breaker kit of FIG. 4 installed, showing how the breaker kit prevents installation of the retrofit circuit breaker into the original model cassette of FIG. 3A; and
FIG. 10 is a partial isometric view of the retrofit cassette of FIG. 3C with the cassette kit of FIG. 4 installed, showing how the cassette kit prevents installation of the original model circuit breaker of FIG. 3A into the retrofit cassette.

### DETAILED DESCRIPTION OF THE INVENTION

Directional phrases used herein, such as, for example, left, right, front, back, top, bottom and derivatives thereof, relate to the orientation of the elements shown in the drawings and are not limiting upon the claims unless expressly recited therein.

As used herein, the singular form of "a", "an", and "the" include plural references unless the context clearly dictates otherwise.

As employed herein, employed herein, when ordinal terms such as "first" and "second" are used to modify a noun, such use is simply intended to distinguish one item from another, and is not intended to require a sequential order unless specifically stated.

As employed herein, the statement that two or more parts or components are "coupled" shall mean that the parts are joined or operate together either directly or indirectly, i.e., through one or more intermediate parts or components, so long as a link occurs. As used herein, "directly coupled" means that two elements are directly in contact with each other. As used herein, "fixedly coupled" or "fixed" means that two components are coupled so as to move as one while maintaining a constant orientation relative to each other.

As employed herein, the term "number" shall mean one or an integer greater than one (i.e., a plurality).

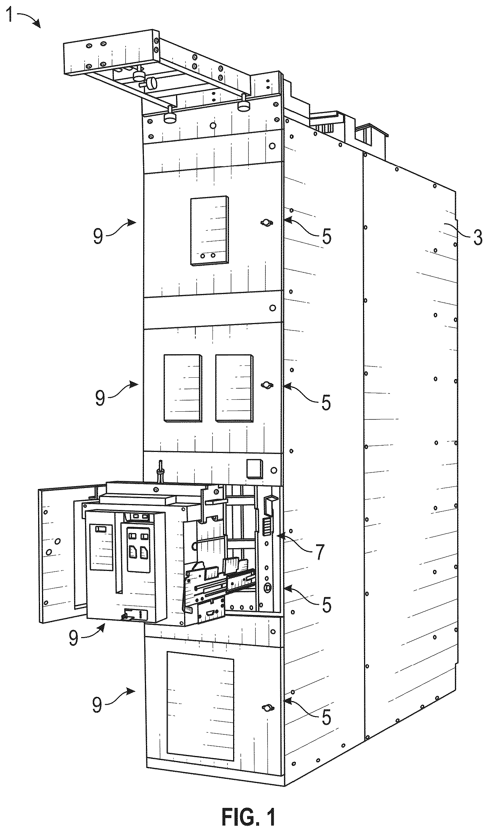

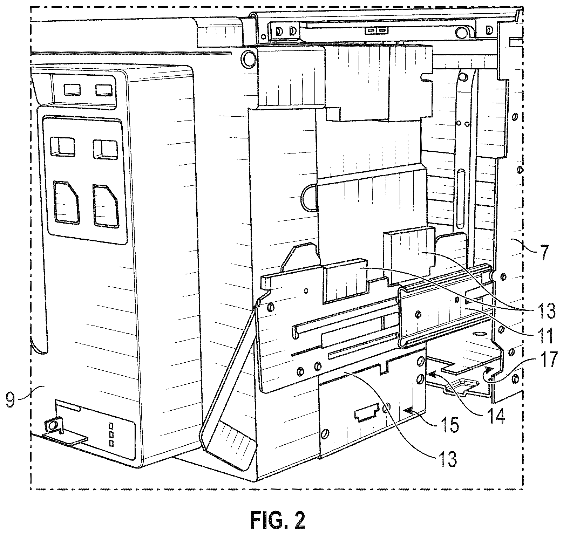

FIG. 1 shows a front view of a drawout circuit breaker system 1, referred to hereinafter as the "drawout system 1" for brevity. The drawout system 1 comprises a frame 3 having a plurality of openings 5, a plurality of cassettes 7 (only one cassette 7 being visible in the FIG. 1), and a plurality of circuit breakers 9. Within each opening, a cassette 7 is installed, and a circuit breaker 9 is movably coupled to the cassette 7. Referring to FIG. 2 in conjunction with FIG. 1, each cassette 7 includes a rail system 11 (sometimes referred to herein as "extension rail(s) 11"), and corresponding rail engagement features 13 are installed on the circuit breaker 9 that enable the circuit breaker 9 to be inserted into and pulled out of the cassette 7 in a sliding fashion while maintaining connection with the cassette 7 at all times through the rail system 11.

In FIG. 1, all of the circuit breakers 9 except for one are shown in a fully drawn in position, which is referred to as a CONNECT position in the relevant technological field, as both primary and secondary connections are established between the circuit breaker 9 and the frame 3 when the circuit breaker 9 is in the fully drawn in position. When a circuit breaker 9 is fully drawn in, the circuit breaker 9 is connected between a power supply and a load and able to perform circuit interrupting functions.

FIG. 1 also shows one circuit breaker 9 that is in a drawn out position, the one circuit breaker 9 being that which is partially outside of the opening 5 such that the cassette 7 is visible. In FIG. 2, the circuit breaker 9 is shown in a fully drawn out position relative to the cassette 7. In particular, in FIG. 2, it can be seen that a rear side 14 of the circuit breaker 9 is positioned forward relative to the front side of the cassette 7. The drawn out position is referred to as a DISCONNECT position in the relevant technological field, as there is neither a primary nor a secondary connection established between the circuit breaker 9 and the frame 3 when the circuit breaker 9 is in the drawn out position. When a given circuit breaker 9 is drawn out from the opening 5, a user can service or perform maintenance on the circuit breaker 9. The circuit breaker 9 must be disconnected from the power supply and any loads prior to being drawn out of the opening 5. However, the drawout system 1 is structured such that any given circuit breaker 9 can be disconnected from its loads and the power supply, and the disconnection of the given circuit breaker 9 will not affect the operation of any other circuit breakers 9 in the drawout system 1 that are still drawn in and connected to their loads and the power supply. That is, all drawn in circuit breakers 9 will continue to operate normally.

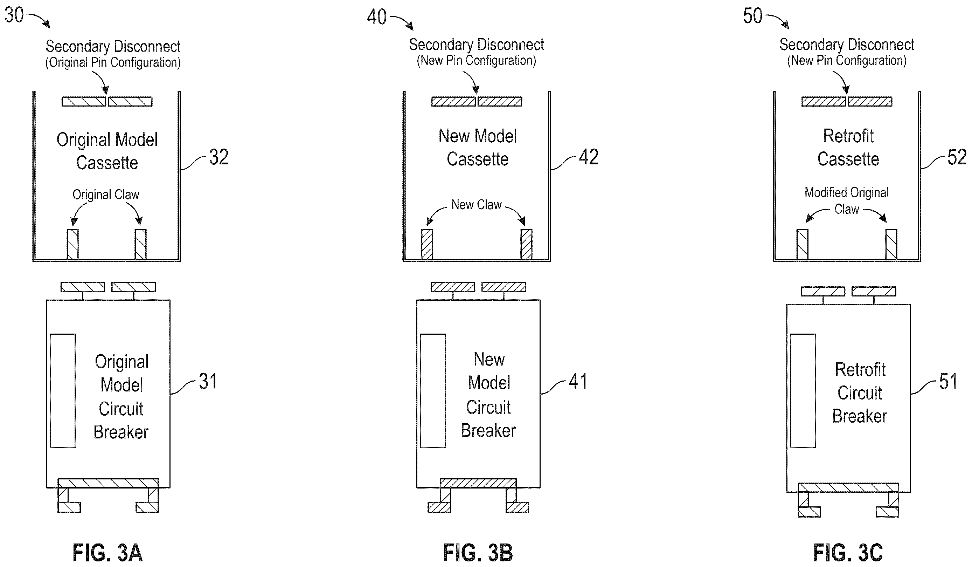

FIG. 3A shows a simplified representation of an original model drawout system 30 including an original model circuit breaker 31 having a first set of electrical characteristics and an original model cassette 32 having a first set of cassette shaft characteristics. FIG. 3B shows a simplified representation of a new model drawout system 40 including a new model circuit breaker 41 having a second set of electrical characteristics and a new model cassette 42 having a second set of cassette shaft characteristics. The first set of electrical characteristics and the second set of electrical characteristics are distinct from one another and pertain to the secondary disconnect features of the corresponding circuit breakers 31 and 41. In particular, the original model circuit breaker 31 has a first pin configuration at its secondary disconnect, and the new model circuit breaker 41 has a second pin configuration at its secondary disconnect, with the first pin configuration and second pin configuration being distinct from one another. The electrical characteristics of the new model circuit breaker 41 make the circuit breaker 41 incompatible with the frame of the original model drawout system 30. Similarly, the electrical characteristics of the original model circuit breaker 31 make the circuit breaker 31 incompatible with the frame of the new model drawout system 40. In order to avoid accidental insertion of either the new model circuit breaker 41 into the original model cassette 32 or of the original model circuit breaker 31 into the new model cassette 42, the new model circuit breaker 41 and the new model cassette 42 were specifically designed to be structurally incompatible with the respective original model cassette 32 and the original model circuit breaker 31 in order to prevent such accidental insertions.

The original drawout system 30 and the new drawout system 40 are produced by the same producer, and the electrical characteristics of the new drawout system 40 may be considered an upgrade over the electrical characteristics of the original drawout system 30. In order to maintain/increase customer satisfaction for owners of the original model drawout system 30, the producer produced the retrofit system 50 that is shown in simplified form in FIG. 3C. The retrofit system 50 comprises a retrofit circuit breaker 51 and a retrofit cassette 52. The retrofit circuit breaker 51 has the electrical characteristics of the new model circuit breaker 41 (including the second pin configuration at its secondary disconnect corresponding to that of the new model circuit breaker 41), and the retrofit cassette 52 includes adaptive structures that enable the secondary disconnect of the retrofit circuit breaker 51 to be properly and safely used in the frame of the original drawout system 30 frame. This is considered advantageous for owners of the original drawout system 30 who want to upgrade to the electrical characteristics of the new model circuit breaker 41, as those owners can keep the frame from the original drawout system 30 while only having to purchase the retrofit circuit breakers 51 and the retrofit cassettes 52. That is, not having to purchase a new frame is considered advantageous. The original model circuit breaker 31, the new model circuit breaker 41, and the retrofit circuit breaker 51 are sometimes referred to hereinafter as the "original breaker 31", the "new breaker 41", and the "retrofit breaker 51" for brevity.

The breaker 51 and the retrofit cassette 52 needed to be structured to prevent two undesirable scenarios: the retrofit breaker 51 being structurally compatible with the original cassette 32, and the original breaker 31 being structurally compatible with the retrofit cassette 52. That is, the retrofit breaker 51 needed to be structured to prevent its insertion into the original model cassette 32, because the original model cassette 32 does not include the adaptive features of the retrofit cassette 52 that enable the secondary disconnect of the retrofit breaker 51 to be properly used within the frame of the original drawout system 30. Similarly, the retrofit cassette 52 needed to be structured to prevent insertion of the original breaker 31 into the retrofit cassette 52, because the adaptive features of the retrofit cassette 52 were not designed for use with the original breaker 31 and thus were not designed to facilitate proper functioning of the secondary disconnect of the original breaker 31 within the frame of the original drawout system 30.

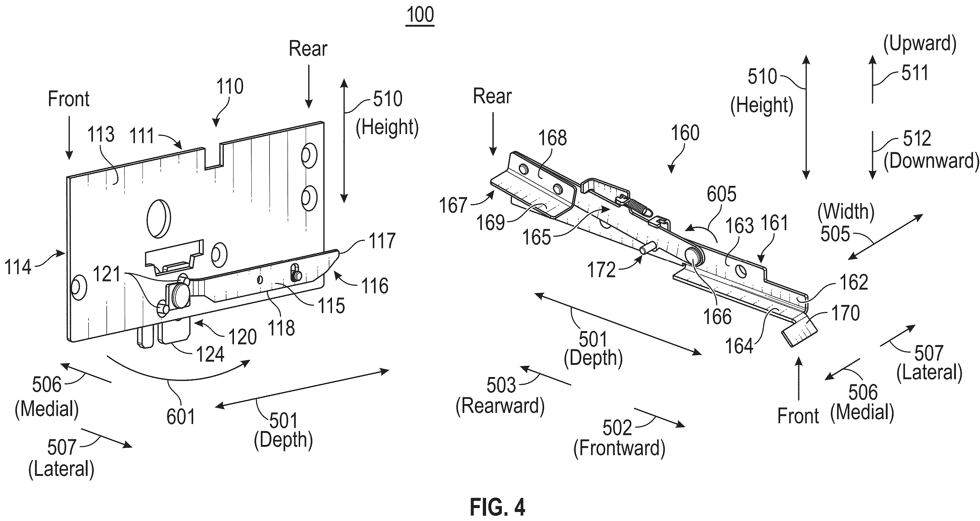

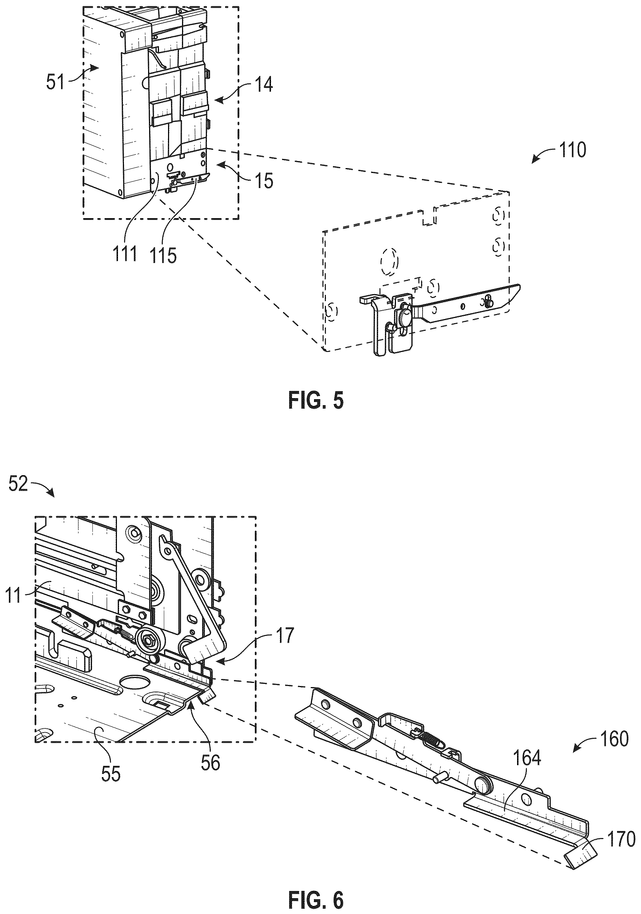

Reference is now made to FIGS. 4-8, which show a rejection interlock system 100 designed to be installed on the retrofit breaker 51 and the retrofit cassette 52 in order to prevent unintended structural compatibilities between the retrofit breaker 51 and any cassette other than the retrofit cassette 52 and to prevent unintended structural compatibilities between the retrofit cassette 52 and any circuit breaker other than the retrofit breaker 51, in accordance with an exemplary embodiment of the disclosed concept. As shown in FIG. 4, the rejection interlock system 100 comprises both a breaker side rejection interlock kit 110 (referred to hereinafter as the "breaker kit 100" for brevity) and a cassette side rejection interlock kit 160 (referred to hereinafter as the "cassette kit 160" for brevity). As shown in FIG. 5, the breaker kit 110 is structured to be field installed and mounted to the exterior of the retrofit breaker 51. As shown in FIG. 6, the cassette kit 160 is structured to be field installed and mounted to the interior of the retrofit cassette 52.

It is noted that the specific cassette 7 and circuit breaker 9 shown in FIG. 2 are not the retrofit cassette 52 and retrofit breaker 51, but at a high level, the general overall structures of drawout circuit breakers and cassettes are similar across models, and the circuit breaker 9 and cassette 7 shown in FIG. 2 can be used to generally demonstrate the area of the retrofit breaker 51 where the breaker kit 110 is to be installed and the area on the retrofit cassette 52 where the cassette kit 160 is to be installed. Accordingly, referring to FIG. 2 in conjunction with FIG. 4, the breaker kit 110 is structured to be installed in a location disposed at the bottom and the rear of the side of the exterior of the retrofit breaker 51, corresponding to the location 15 indicated on the circuit breaker 9 in FIG. 2, and the cassette kit 160 is structured to be installed in a location disposed at the bottom and the front of the side of the interior of the retrofit cassette 52, corresponding to the location 17 indicated on the cassette 7 in FIG. 2.

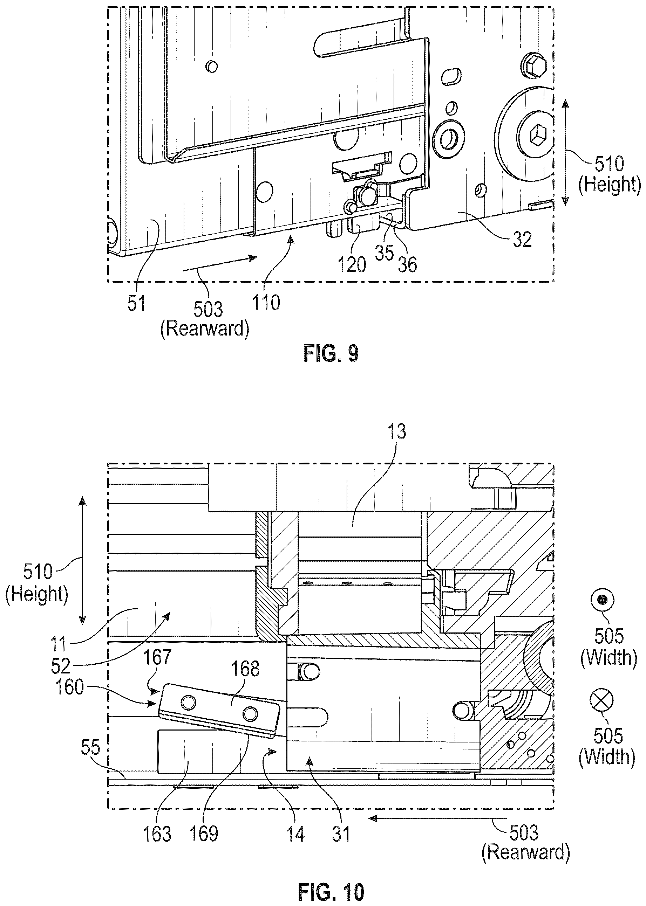

As a general note, because the general overall structures of drawout circuit breakers and cassettes are similar across models at a high level, the reference numbers 11, 14, 15, and 17 are used in some subsequent figures (i.e. FIG. 5, 6, 9, 10) for differently numbered circuit breakers and differently numbered cassettes to refer respectively to the extension rail of a cassette, the rear side of a circuit breaker, the location on the circuit breaker where the breaker kit 110 is intended to be installed, and the location on the cassette where the cassette kit 160 is intended to be installed. For example, the reference number 14 is used to indicate the rear side of the circuit breaker 7 in FIG. 2 and the rear side of the original model circuit breaker 31 in FIG. 10.

The locations 15 and 17 are both positioned so that they are disposed underneath the extension rail 11 of the retrofit cassette 52 when the retrofit breaker 51 is coupled to the retrofit cassette 52. The locations 15 and 17 are also positioned so that the breaker kit 110 and the cassette kit 160 must engage with one another once the rear end 14 of the retrofit breaker 51 enters the front end of the retrofit cassette 52 while being drawn into the retrofit cassette 52. Once the breaker kit 110 is installed on the retrofit breaker 51, the retrofit breaker 51 is not structurally compatible for insertion into the original model cassette 32. Similarly, once the cassette kit 160 is installed on the retrofit cassette 52, the original model breaker 31 is not structurally compatible for insertion into the retrofit cassette 52.

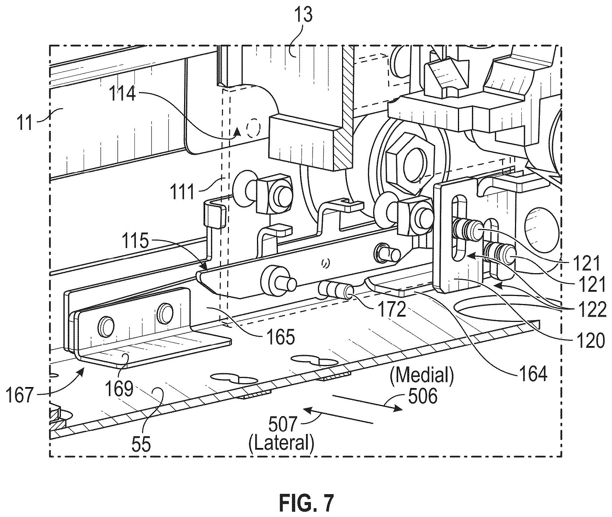

The mechanics of how the rejection interlock system 100 enables the retrofit breaker 51 to be inserted into the retrofit cassette 52 will now be explained in conjunction with FIGS. 4-8. As an initial matter, it is noted that orientations of the breaker kit 110 and the cassette kit 160 relative to one another as shown in FIG. 4 and FIG. 7 are rotated from what their relative orientations are to one another when the retrofit breaker 51 (with the breaker kit 110 installed) is positioned for insertion into the retrofit cassette 52 (with the cassette kit 160 installed), which is discussed further later herein. In order to provide a common frame of reference between FIGS. 4-10, a depth dimension 501, a frontward direction 502, a rearward direction 503, a width dimension 505, a medial direction 506, a lateral direction 507, a height dimension 510, an upward direction 511, and a downward direction 512 are labeled in the figures. The depth dimension 501, the width dimension 505, and the height dimension 510 are all orthogonal to one another. The frontward direction 502 and the rearward direction 503 oppose one another and both lie in the depth dimension 501. The medial direction 506 and the lateral direction 507 oppose one another and both lie in the width dimension 505. The upward direction 511 and the downward direction 512 oppose one another and both lie in the height dimension 510.

As used hereinafter, the term "front" is used to describe the side or end of a component that is positioned furthest in the frontward direction 502, and the term "rear" is used to describe the side or end of a component that is positioned furthest in the rearward direction 503. In FIG. 4, a front side and a rear side of the breaker kit 110 are labeled, and a front side and a rear side of the cassette kit 160 are labeled. Relative to the orientation of the breaker kit 110 and the orientation of the cassette kit 160 shown in FIG. 4, the breaker kit 110 would need to be rotated in the counterclockwise direction 601 indicated in FIG. 4 (said counterclockwise direction 601 being within a plane extending the depth and width dimensions 501, 505) while the cassette kit 160 is maintained in the orientation shown in FIG. 4 in order for the retrofit breaker 51 to be able to be coupled to the extension rails 11 and be inserted into the retrofit cassette 52. This rotation of the breaker kit 110 relative to the orientation shown in FIG. 4 is shown in FIG. 7. In FIG. 4, the medial and lateral directions 506, 507 are labeled next to both the cassette kit 160 and the breaker kit 110, so that the orientation of the breaker kit 110 relative to the cassette kit 160 after rotation in the counterclockwise direction 601 can be better visualized.

It will be appreciated that when the breaker kit 110 as shown in FIG. 4 is rotated in the counterclockwise direction 601, the front end and the rear end of the breaker kit 110 will be oriented in the same direction as the front end and the rear end of the cassette kit 160, as shown in FIG. 7. As such, the "front" and "rear" designations in FIG. 4 denote the orientation that the breaker kit 110 and cassette kit 160 need to be in when the retrofit breaker 51 is positioned for insertion into the retrofit cassette 52, shown in FIG. 7. The orientation in which each of the breaker kit 110, the cassette kit 160, the retrofit breaker 51, and the retrofit cassette 52 need to be disposed relative to one another in order to enable the retrofit circuit breaker 51 to be inserted into the retrofit cassette 52 can be referred to as the "insertion orientation", the insertion orientation being shown in FIG. 7.

The breaker kit 110 comprises a side mounting plate 111 that is structured to be mounted to the side of the exterior of the retrofit breaker 51 using fasteners such as bolts, for example and without limitation. Because some components of the breaker kit 110 are positioned on one side of the side mounting plate 111 while other components of the breaker kit 110 are positioned on another side of the side mounting plate 111, the side mounting plate 111 is depicted as transparent in FIGS. 5, 7, and 8 so that the components of the breaker kit 110 positioned on different sides of the side mounting plate 111 can be viewed simultaneously and their structural relationship better understood. The cassette kit 160 comprises a mounting bracket 161 that is structured to be mounted to the side of the interior of the retrofit cassette 52 using fasteners such as bolts, for example and without limitation. The mounting bracket 161 comprises a mounting portion 162 that gets directly coupled to the interior of a side wall of the retrofit cassette 52. It is noted that the medial direction 506 is oriented to denote orientation from the mounting portion 162 toward the interior of the cassette 52 and the lateral direction 507 is oriented to denote orientation from the interior of the cassette 52 toward the mounting portion 162.

In the cassette kit 160, the mounting portion 162 has a breaker facing surface 163. In the breaker kit 110, the side mounting plate 111 has a cassette facing surface 113. It is noted that the cassette facing surface 113 is the lateral 507 surface of the side mounting plate 111, and the side mounting plate 111 further comprises a medial surface 114 disposed opposite the cassette facing surface 113. The side mounting plate 111 gets mounted to the retrofit breaker 51 and the mounting bracket 161 gets mounted to the retrofit cassette 52 such that, when the retrofit breaker 51 and retrofit cassette 52 are in the insertion orientation, the cassette facing surface 113 and the breaker facing surface 163 are parallel to one another. It is noted that, in the insertion orientation, the cassette facing surface 113 and the breaker facing surface 163 are planar in the depth and height dimensions 501, 510.

It is noted that, in FIG. 7, the side mounting plate 111 is depicted as transparent so that the interaction between the components of the breaker kit 110 and of the cassette kit 160 after successful insertion of the retrofit breaker 51 into the retrofit cassette 52 can be better discerned. It is further noted that the viewing plane of FIG. 7 is shown from the perspective of looking from the retrofit breaker 51 toward the retrofit cassette 52, and that some components of the retrofit breaker 51 that would otherwise obstruct the view of the components of the breaker kit 110 and the cassette kit 160 are hidden.

The breaker kit 110 comprises an actuator blade 115 that is coupled to the side mounting plate 111. The actuator blade 115 is planar and is coupled to the side mounting plate 111 such that the planar surfaces of the actuator blade 115 are parallel to the side mounting plate 111. The actuator blade 115 comprises a sloped edge 116 that slopes relative to the height and depth dimensions 510, 501 and extends between a rear end 117 of the actuator blade 115 and bottom edge 118 of the actuator blade 115. The sloped edge 116 slopes downward 512 from the rear end 117 to the bottom edge 118.

In the cassette kit 160, the mounting bracket 161 further comprises a guiding track 164 that extends orthogonally from the mounting portion 162 in the medial direction 506. Specifically, the mounting portion 162 is planar in a plane that extends in the depth and height dimensions 501, 510, while the guiding track 164 is planar in a plane that extends in the depth and width dimensions 501, 505. When the retrofit breaker 51 is in the insertion orientation and positioned on the extension rails 11 at its farthest position outside of the cassette 52 prior to being inserted into the retrofit cassette 52 (i.e. at its position furthest in the frontward 502 direction), the rear end of the breaker kit 110 will be positioned frontward 502 of the front end of the cassette kit 160, with the actuator blade 115 positioned so that its planar surface is parallel to the breaker facing surface 163 and so that the actuator blade 115 overlaps with the guiding track 164 in the width dimension 505.

The cassette kit 160 further comprises a driven lever 165, which is rotatably coupled at its front end 166 to the mounting bracket 161 via a rivet. The driven lever 165 is planar in a plane extending in the depth and height dimensions 501, 510, and the driven lever 165 is rotatably coupled to the mounting bracket 161 so that the planar surface of the driven lever 165 is parallel to the planar surface 163. The rotatable coupling of the driven lever 165 to the mounting bracket 161 enables the driven lever 165 to rotate in the counterclockwise direction 605 indicated in FIG. 4 (said counterclockwise direction 605 being within a plane extending the depth and height dimensions 501, 510), when actuated to do so.

An L-bracket 167 is coupled to the rear end of the driven lever 165, with the L-bracket 167 comprising a first planar section 168 and a second planar section 169 extending orthogonally and medially 506 from the first planar section 168. The first planar section 168 is directly coupled to the driven lever 165 such that the first planar section 168 is planar in the depth and height dimensions 501, 510. The driven lever 165 is spring-loaded such that, in the absence of external force, the default position of the driven lever 165 is that in which the rear end of the driven lever 165 is disposed upward 511 relative to the front end 166, such that the L-bracket is disposed upward 511 relative to the front end 166.

The mounting bracket 161 in the cassette kit 160 further comprises a driving ramp 170. The driving ramp 170 is planar and extends frontward 502 from the guiding track 164 such that the driving ramp 170 is disposed frontward 502 relative to both the guiding track 164 and the mounting portion 162. The driving ramp 170 also extends downward 512 from the guiding track 164 such that the driving ramp 170 is neither co-planar nor parallel with the guiding track 164 and is angled relative to the guiding track 164. The driving ramp 170 is the front-most portion of the cassette kit 160. The driving ramp 170 also extends medially 506 from the guiding track 164.

The cassette kit 160 further comprises an engagement pin 172 that is coupled to and extends medially 506 from the driven lever 165. The engagement pin 172 is disposed rearward 503 to the lever's front end 166 and to the guiding track 164, and is disposed frontward 502 of the L-bracket 167.

Referring to FIG. 7 in conjunction with FIG. 4, the breaker kit 110 further comprises a slider plate 120 and a number of slider pins 121 that couple the slider plate 120 to the side mounting plate 111. It is noted that the actuator blade 115 is positioned laterally 507 of the side mounting plate 111, while the slider plate 120 is positioned medially 506 of the side mounting plate 111. The slider plate 120 is planar in the depth and height dimensions 501, 510, and comprises a number of elongated apertures 122. The elongated apertures 122 extend in the height and depth dimensions 510, 501 and are longer in the height dimension 510 than the depth dimension 501. For each elongated aperture 122, there is a slider pin 121 that corresponds to the aperture 122. Each slider pin 121 is fixedly coupled to the side mounting plate 111, and extends through an opening in the side mounting plate 111 from the cassette facing surface 113 (FIG. 4) to the medial surface 114 (FIG. 7) of the side mounting plate 111. For each slider pin 121, the slider pin 121 extends far enough medially 506 that it gets inserted into the corresponding elongated aperture 122 in the slider plate 120 and extends medially 506 past the solid portion of the slider plate 120.

As detailed later herein, the breaker kit 110 and the cassette kit 160 must engage one another in order to enable the retrofit breaker 51 to be inserted into the retrofit cassette 52. Prior to the breaker kit 110 and the cassette kit 160 engaging one another, each slider pin 121 is positioned in the corresponding elongated aperture 122 such that, relative to the height dimension 510, the slider pin 121 is positioned partway between the top end and bottom end of the elongated aperture 122 and spaced apart from both the top end and the bottom end of the aperture 122. The medial 506 extension of each slider pin 121 past the slider plate 120 couples the slider plate 120 to the side mounting plate 111 in a movable fashion. Specifically, if a force is exerted upward 511 on the slider plate 120, the slider plate 120 will move (i.e. slide) upward 511 relative to the side mounting plate 111, due to the clearance between each slider pin 121 and the bottom of the corresponding elongated aperture 122. The coupling between the slider 120 and the side mounting plate 111 is designed such that, prior to the breaker kit 110 and the cassette kit 160 engaging one another, a bottom edge 124 of the slider plate 120 is disposed further in the downward direction 512 than any other portion of the breaker kit 110. In addition, the breaker kit 110 is designed so that when the breaker kit 110 is installed on the retrofit breaker 51, the bottom edge 124 of the slider plate 120 is disposed further downward 512 than a bottom surface of the retrofit breaker 51.

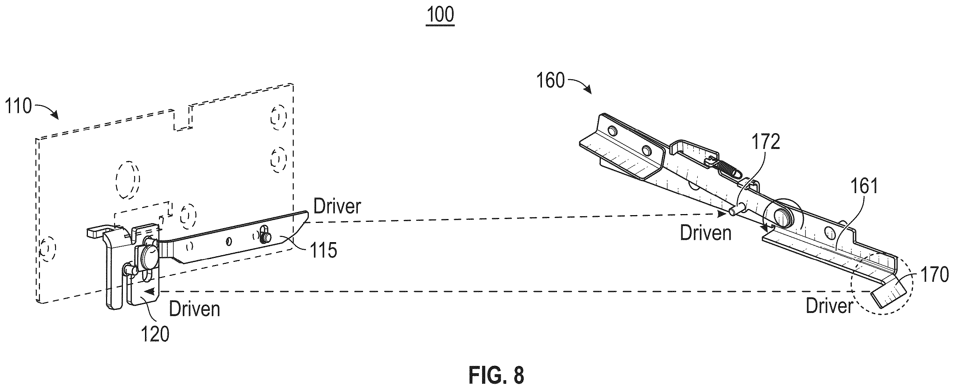

The mechanics of the insertion of the retrofit circuit breaker 51 into the retrofit cassette 52 as facilitated by the rejection interlock kit 100 will now be detailed. The position/state of the components of the breaker kit 110 and the components of the cassette kit 160 prior to the retrofit breaker 51 being inserted into the retrofit cassette 52 and prior to the breaker kit 110 and cassette kit 160 engaging one another will be referred to hereinafter as the "default" state or position. The breaker kit 110 and the cassette kit 160 are both shown in their default states in FIGS. 4-6 and 8. It is noted that the cassette kit 160 is structured to be installed in the retrofit cassette 52 with the guiding track 164 lying flat on an interior floor 55 of the cassette. FIG. 8 provides a simplified depiction of which components of the breaker kit 110 and which components of the cassette kit 160 must engage with one another in order to facilitate insertion of the retrofit breaker 51 into the retrofit cassette 52. In particular, as detailed further hereinafter and as indicated in FIG. 8 by the insertion of the term "Driver" next to the actuator blade 115 and the driving ramp 170 and by the insertion of the term "Driven" next to the engagement pin 172 and the slider plate 120, the actuator blade 115 engages (i.e. drives) the engagement pin 172, and the driving ramp 170 engages/drives the slider plate 120.

Prior to the retrofit breaker 51 being inserted into the retrofit cassette 52, when the breaker kit 110 is in its default state and the retrofit breaker 51 is positioned for insertion (i.e. when the retrofit breaker 51 is positioned as far frontward 502 as it can be while coupled to the cassette's extension rail 11), the rear end of the breaker kit 110 will be positioned frontward 502 of the front end of the cassette kit 160. In this position, the actuator blade 115 is positioned with its planar surface parallel to the breaker facing surface 163 and the actuator blade 115 overlaps with the guiding track 164 in the width dimension 505, and the bottom edge 118 of the actuator blade 115 is disposed upward 511 relative to the guiding track 164 of the cassette kit 160 (such that there is space between the bottom edge 118 and the guiding track 164 in the height dimension 510). In this position, the breaker kit's actuator blade 115 will overlap with the cassette kit's engagement pin 172 in the width dimension 505, and either the rear end 117 of the actuator blade 115 or the top of the sloped edge 116 of the actuator blade 115 will be level with the engagement pin 172 in the height dimension 510. In addition, the rear end of driven lever 165 is disposed upward 511 relative to its front end 166 such that the L-bracket 167 is disposed upward 511 relative to the front end 166. Furthermore, the bottom edge 124 of the slider plate 120 is disposed downward 512 relative to the guiding track 164, and the sliding plate 120 overlaps with the driving ramp 170 in both the height dimension 510 and the width dimension 505. The sliding plate 120 does not, however, overlap with the guiding track 164 in the width dimension 505.

When the retrofit breaker 51 is pushed rearward 503 in order to insert the retrofit breaker 51 into the retrofit cassette 52, the first instance of engagement between the breaker kit 110 and the cassette kit 160 occurs when the actuator blade 115 is disposed far enough rearward 503 to engage the engagement pin 172. Once the actuator blade 115 makes initial contact with the engagement pin 172, as the actuator blade 115 keeps moving rearward 503, the actuator blade 115 maintains contact with the engagement pin 172, initially via the sloped edge 116 and then via the bottom edge 118, such that the actuator blade 115 exerts a downward 512 force on the engagement pin 172 that actuates rotation of the driven lever 165 in a direction 605 (the counterclockwise direction 605 relative to the viewing plane of FIG. 4) that causes the L-bracket 167 to move downward 512 until the second planar section 169 is lying flat against the cassette interior floor 55 (in the depth and width dimensions 501, 505), as shown in FIG. 7.

As the retrofit breaker 51 is being drawn into the retrofit cassette 52, the rear side 14 of the retrofit breaker 51 cannot move rearward 503 to clear the second planar section 169 until the second planar section 169 lies flat on the interior floor 55 of the retrofit cassette 55 in the depth and width dimensions 501, 505. Referring to FIG. 6, the cassette kit 160 is installed in the retrofit cassette 52 such that the driving ramp 170 extends forward 502 from the interior floor 55 of the retrofit cassette 52 to the exterior of the retrofit cassette 52. As the rear side 14 of the retrofit breaker 51 starts to move over the second planar section 169, the rear end of the breaker kit's slider plate 120 simultaneously encounters the cassette kit's driving ramp 170. It is noted that an edge 56 (see FIG. 6) is created by the thickness of the cassette's floor 55 and that said edge 56 extends in the height dimension 510. The sloped disposition of driving ramp 170 in the upward 511 and rearward 503 directions provides a ramp over the edge 56 so that the slider plate 120 can clear the edge 56 to enable the retrofit breaker 51 to continue moving rearward 503.

It should be understood that the efficacy of the rejection interlock system 100 is predicated on a user only installing the breaker kit 110 on the retrofit breaker 51 and only installing the cassette kit 160 on the retrofit cassette 52, and it is assumed that a user would not install the breaker kit 110 on any circuit breaker other than the retrofit breaker 51 and that the user would not install the cassette kit 160 on any cassette other than the retrofit cassette 52. Reference is now made to FIG. 9 to demonstrate how the breaker kit 110 prevents the retrofit breaker 51 from being inserted into the original model cassette 32. As shown and previously explained in conjunction with FIG. 6, the breaker kit 110 is designed so that, when it is installed on the retrofit breaker 51, the slider plate 120 extends further downward 512 than the floor of the corresponding retrofit cassette 52. As shown in FIG. 9, the slider plate 120 does indeed extend further downward than the floor 35 of the original model cassette 32. An edge 36 is created by the thickness of the cassette's floor 35, and said edge 36 extends in the height dimension 510. Without the cassette kit 160 being installed on the original model cassette 32, the cassette floor's edge 36 obstructs the retrofit breaker 51 from moving further rearward 503 once the retrofit breaker 51 the breaker kit's slider plate 120 engages the cassette floor's edge 36, due to the absence of the cassette kit's driving ramp 170.

Reference is now made to FIG. 10 to demonstrate how the cassette kit 160 prevents the original breaker 31 from being inserted into the retrofit cassette 52. As shown in FIG. 10, the cassette kit 160 is designed so that, when it is installed on the retrofit cassette 52, the L-bracket 167 is positioned at a height that overlaps with the original breaker 31 in the height dimension 510, thus obstructing rearward 503 movement of the original breaker 31. In particular, the second planar section 169 of the L-bracket 167 overlaps with the original breaker 31 in the width dimension 505 (the width dimension 505 being orthogonal to the viewing plane of FIG. 10), and once the rear side 14 of the original breaker 31 encounters the second planar section 169 of the L-bracket 167, the original breaker 31 is no longer able to move rearward 503 into the retrofit cassette 52. Because the breaker kit 110 is not installed on the original breaker 31, the actuator blade 115 is not available to actuate rotation of the driven lever 165 that would cause the L-bracket's second planar section 169 to lie flat against the floor 55 of the retrofit cassette 52.

While specific embodiments of the invention have been described in detail, it will be appreciated by those skilled in the art that various modifications and alternatives to those details could be developed in light of the overall teachings of the disclosure. Accordingly, the particular arrangements disclosed are meant to be illustrative only and not limiting as to the scope of disclosed concept which is to be given the full breadth of the claims appended and any and all equivalents thereof.

## Claims

1. A rejection interlock system for use with a circuit breaker and a cassette in a drawout circuit breaker system, the rejection interlock system comprising:
a breaker kit, the breaker kit including:
a side mounting plate;
an actuator blade fixedly coupled to the side mounting plate; and
a slider plate movably coupled to the side mounting plate; and
a cassette kit, the cassette kit including:
a mounting bracket, the mounting bracket comprising:
a mounting portion;
a guiding track extending orthogonally from the mounting portion; and
a driving ramp extending downward from the guiding track at a non-orthogonal sloped angle;
a driven lever rotatably coupled to the mounting bracket at a front end of the driven lever;
an L-bracket fixedly coupled to the driven lever at a rear end of the driven lever opposite the front end; and
an engagement pin extending orthogonally from the driven lever,
wherein the side mounting plate is structured to be fixedly coupled to an exterior side wall of the circuit breaker,
wherein the mounting bracket is structured to be fixedly coupled to an interior side wall of the cassette such that the guiding track lies flat on an interior floor of the cassette when the mounting portion is fixedly coupled to the interior side wall,
wherein the breaker kit and cassette kit are structured such that, when respectively installed on the circuit breaker and the cassette:
in the absence of any external force acting upon the cassette kit, a default position of the driven lever positions the L-bracket to be upward relative to the front end,
in the absence of any external force acting upon the breaker kit, a default position of the slider plate positions the slider plate to extend further downward than the interior floor,
the actuator blade is structured to engage and exert a downward force on the engagement pin when the circuit breaker moves toward the interior of the cassette,
the driven lever is structured to rotate so that the L-bracket moves downward to lie flat on the interior floor when the downward force is exerted on the engagement pin, and
the driving ramp is structured to exert an upward force on the slider plate as the circuit breaker moves toward the interior of the cassette so that a bottom edge of the slider plate can clear the interior floor in the cassette.

2. The rejection interlock system of claim 1,
wherein the actuator blade is positioned on a first side of the mounting plate and the slider plate is positioned on a second side of the side mounting plate disposed opposite the first side.

3. The rejection interlock system of claim 1,
wherein the actuator blade comprises a rear end, a bottom edge, and a sloped edge,
wherein the rear end that is the rear-most point of the actuator blade,
wherein the bottom edge extends horizontally,
wherein the sloped edge that extends from the rear end to the bottom edge such that the sloped edge slopes downward from the rear end to the bottom edge, and
wherein the actuator blade is structured so that the sloped edge engages the engagement pin first and the bottom edge engages the engagement pin second when the circuit breaker moves toward the interior of the cassette.

4. The rejection interlock system of claim 1,
wherein the driven lever is spring loaded, and
wherein the spring loading of the driven lever causes the L-bracket to be positioned upward relative to the front end in the default position.

5. The rejection interlock system of claim 1,
wherein the slider plate comprises a number of elongated apertures,
wherein for each elongated aperture, the breaker kit includes a slider pin that corresponds to the elongated aperture,
wherein each slider pin is fixedly coupled to the side mounting plate and extends from a cassette facing surface of the side mounting plate to a medial surface of the side mounting plate disposed opposite the cassette facing surface, and
wherein, for each elongated aperture the height of the elongated aperture is greater than the width of the elongated aperture.

6. A drawout circuit breaker system, the drawout circuit breaker system comprising:
a drawout circuit breaker;
a drawout cassette; and
a rejection interlock system, the rejection interlock system comprising:
a breaker kit, the breaker kit including:
a side mounting plate;
an actuator blade fixedly coupled to the side mounting plate; and
a slider plate movably coupled to the side mounting plate; and
a cassette kit, the cassette kit including:
a mounting bracket, the mounting bracket comprising:
a mounting portion;
a guiding track extending orthogonally from the mounting portion; and
a driving ramp extending downward from the guiding track
at a non-orthogonal sloped angle;
a driven lever rotatably coupled to the mounting bracket at a front end of the driven lever;
an L-bracket fixedly coupled to the driven lever at a rear end of the driven lever opposite the front end; and
an engagement pin extending orthogonally from the driven lever,
wherein the side mounting plate is structured to be fixedly coupled to an exterior side wall of the circuit breaker,
wherein the mounting bracket is structured to be fixedly coupled to an interior side wall of the cassette such that the guiding track lies flat on an interior floor of the cassette when the mounting portion is fixedly coupled to the interior side wall,
wherein the breaker kit and cassette kit are structured such that, when respectively installed on the circuit breaker and the cassette:
in the absence of any external force acting upon the cassette kit, a default position of the driven lever positions the L-bracket to be upward relative to the front end,
in the absence of any external force acting upon the breaker kit, a default position of the slider plate positions the slider plate to extend further downward than the interior floor,
the actuator blade is structured to engage and exert a downward force on the engagement pin when the circuit breaker moves toward the interior of the cassette,
the driven lever is structured to rotate so that the L-bracket moves downward to lie flat on the interior floor when the downward force is exerted on the engagement pin, and
the driving ramp is structured to exert an upward force on the slider plate as the circuit breaker moves toward the interior of the cassette so that a bottom edge of the slider plate can clear the interior floor in the cassette.

7. The drawout circuit breaker system of claim 6,
wherein the actuator blade is positioned on a first side of the mounting plate and the slider plate is positioned on a second side of the side mounting plate disposed opposite the first side.

8. The drawout circuit breaker system of claim 6,
wherein the actuator blade comprises a rear end, a bottom edge, and a sloped edge,
wherein the rear end that is the rear-most point of the actuator blade,
wherein the bottom edge extends horizontally,
wherein the sloped edge that extends from the rear end to the bottom edge such that the sloped edge slopes downward from the rear end to the bottom edge, and
wherein the actuator blade is structured so that the sloped edge engages the engagement pin first and the bottom edge engages the engagement pin second when the circuit breaker moves toward the interior of the cassette.

9. The drawout circuit breaker system of claim 6,
wherein the driven lever is spring loaded, and
wherein the spring loading of the driven lever causes the L-bracket to be positioned upward relative to the front end in the default position.

10. The drawout circuit breaker system of claim 6,
wherein the slider plate comprises a number of elongated apertures,
wherein for each elongated aperture, the breaker kit includes a slider pin that corresponds to the elongated aperture,
wherein each slider pin is fixedly coupled to the side mounting plate and extends from a cassette facing surface of the side mounting plate to a medial surface of the side mounting plate disposed opposite the cassette facing surface, and
wherein, for each elongated aperture the height of the elongated aperture is greater than the width of the elongated aperture.
